# EUROPEAN PATENT APPLICATION

(11) **EP 3 139 465 A1**
(43) Date of publication of application: **08.03.2017**
(21) Application number: 16186238.8
(22) Date of filing: 30.08.2016
(51) Int. Cl.: H02J 7/00, B60L 11/18, H02J 7/04, H02J 7/02, H02M 1/32

(54) **CHARGING APPARATUS AND VEHICLE**

(30) Priority: 04.09.2015 JP 2015174960
(71) Applicant: Toyota Jidosha Kabushiki Kaisha, Toyota-shi, Aichi 471-8571 (JP)
(72) Inventor: SUZUKI, Yasuo, Toyota-shi, Aichi 471-8571 (JP)
(74) Representative: TBK

(57) **Abstract**

A charging apparatus that charges an electric storage device with electric power from an alternating-current power supply includes: a first converter that converts alternating current from the power supply into direct current and outputs it; a second converter that converts a voltage from the first converter into a voltage of the electric storage device and outputs it to the electric storage device; and an electronic control unit configured to control the first and second converters to control charging electric power supplied to the electric storage device, and to continue charging of the electric storage device while limiting an upper limit of charging electric power to a larger extent (S21, S22) when the number of times that the voltage on the output side of the first converter is out of a prescribed range exceeds a prescribed value during charging (S20), than when the number of times does not exceed the prescribed value during charging (S20).

## Description

### BACKGROUND OF THE INVENTION

### 1. Field of the Invention

The invention relates to a charging apparatus configured to charge an electric storage device with electric power supplied from an alternating-current power supply.

### 2. Description of Related Art

Japanese Patent Application Publication No. 2014-17917 (JP 2014-17917 A) describes a charging apparatus including: a battery charger that charges an in-vehicle battery with electric power supplied from an alternating-current power supply disposed outside a vehicle; and a controller that controls the battery charger. The battery charger includes an AC-DC converter circuit (power-factor correction boost circuit) that converts alternating current received from the alternating-current power supply into direct current. The battery charger also includes an isolated DC-DC converter circuit that converts a voltage output from the AC-DC converter circuit and outputs the converted voltage to the in-vehicle battery. When the in-vehicle battery is charged with electric power supplied from the alternating-current power supply disposed outside the vehicle, the controller controls the AC-DC converter circuit such that the voltage output from the AC-DC converter circuit becomes a target voltage.

However, in the charging apparatus described in JP 2014-17917 A, the output voltage from the AC-DC converter circuit (power-factor correction boost circuit) does not become a target voltage when an abnormal alternating-current voltage waveform is input into the battery charger from the alternating-current power supply. This causes a difference between output electric power from the AC-DC converter circuit and output electric power from the DC-DC converter circuit, which causes fluctuations in voltage on the output side of the AC-DC converter circuit. Under the influence of the fluctuations, inrush currents may be generated.

In view of this, the battery charger may temporarily be stopped when the voltage on the output side of the AC-DC converter is out of a prescribed range. However, such a technique causes an intermittent charging operation (a charging operation restarted and then immediately stopped) to be repeated when abnormality in alternating-current voltage waveform is frequently repeated over a prolonged period. This may result in an excessive increase in charging time.

### SUMMARY OF THE INVENTION

The invention provides a charging apparatus that charges an electric storage device with electric power supplied from an alternating-current power supply, the charging apparatus being configured to reduce fluctuations in voltage on the output side of an AC-DC converter circuit while preventing an excessive increase in charging time even when an abnormal voltage waveform is input into a battery charger from the alternating-current power supply.

A first aspect of the invention relates to a charging apparatus configured to charge an electric storage device with electric power supplied from an alternating-current power supply. The charging apparatus includes: a first converter configured to convert alternating current received from the alternating-current power supply into direct current, and the first converter configured to output the direct current; a second converter configured to convert a voltage output from the first converter into a voltage of the electric storage device, and the second converter configured to output the converted voltage to the electric storage device; and an electronic control unit configured to control the first converter and the second converter to control charging electric power to be supplied to the electric storage device. The electronic control unit is configured to continue charging of the electric storage device while limiting an upper limit of the charging electric power to a larger extent when the number of times that the voltage on an output side of the first converter is out of a prescribed range exceeds a prescribed number of times during the charging of the electric storage device, than when the number of times that the voltage on the output side of the first converter is out of the prescribed range does not exceed the prescribed number of times during the charging of the electric storage device.

With this configuration, when the number of times that the voltage on the output side of the first converter is out of the prescribed range exceeds the prescribed number of times during the charging of the electric storage device, charging of the electric storage device is continued while the charging electric power is limited. Because limiting the charging electric power decreases a difference between output electric power from the first converter and output electric power from the second converter, it becomes possible to narrow the range of fluctuations of the voltage on the output side of the first converter. Furthermore, because the charging of the electric storage device is continued while the charging electric power is limited, the intermittent charging operation is avoided. As a result, it becomes possible to reduce fluctuations in the voltage on the output side of the first converter (AC-DC converter circuit) while preventing an excessive increase in charging time.

In the charging apparatus, the electronic control unit may be configured to clear a count of the number of times that the voltage on the output side of the first converter is out of the prescribed range to zero when a predetermined length of time has elapsed since the voltage on the output side of the first converter has been out of the prescribed range.

In the charging apparatus, the electronic control unit may be configured to clear a count of the number of times that the voltage on the output side of the first converter is out of the prescribed range to zero when the voltage on the output side of the first converter has remained within the prescribed range for a predetermined length of time.

A second aspect of the invention relates to a vehicle. The vehicle includes a drive unit that moves the vehicle using electric power, an electric storage device coupled to the drive unit and that supplies the electric power to the drive unit, a connector by which electric power can be supplied to the electric storage device from an alternating-current power supply external of the vehicle, and the charging apparatus according to the first aspect coupled between the connector and the electric storage device.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic diagram illustrating the entire configuration of a vehicle;
FIG. 2 is a first flowchart illustrating a procedure executed by an ECU; and
FIG. 3 is a second flowchart illustrating a procedure executed by the ECU.

### DETAILED DESCRIPTION OF EMBODIMENTS

Hereinafter, an embodiment of the invention will be described in detail with reference to the accompanying drawings. Note that identical or like elements will be denoted by identical reference numerals to omit the description thereof.

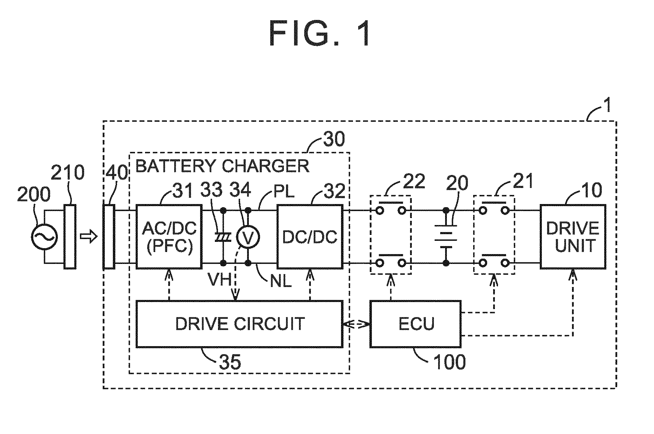

FIG. 1 is a schematic diagram illustrating the entire configuration of a vehicle 1 including a charging apparatus according to the present embodiment. The vehicle 1 includes a drive unit 10, a battery (electric storage device) 20, a system main relay 21, a charging relay 22, a battery charger 30, a connector 40, and an electronic control unit (ECU) 100. The battery charger 30 includes an AC-DC converter 31, a DC-DC converter 32, a capacitor 33, a voltage sensor 34, and a drive circuit 35.

The drive unit 10 generates vehicle driving force using electric power supplied from the battery 20. The drive unit 10 includes a motor generator mechanically connected to drive wheels, and a power control unit (e.g. an inverter) that controls the amount of current applied to the motor generator. The output from the drive unit 10 (the amount of current applied to the motor generator) is controlled in response to a control signal from the ECU 100. The drive unit 10 may include one motor generator, or may include two or more motor generators.

The vehicle 1 travels by using the driving force generated by the motor generator of the drive unit 10. The vehicle 1 may be configured to travel by using the power generated by an engine (not illustrated), in addition to the driving force generated by the drive unit 10.

The battery 20 is a rechargeable electric storage device, which is a secondary battery, such as a nickel-hydrogen battery, a lithium-ion battery, or a lead storage battery. The electric storage device may be a large-capacity capacitor in place of the battery 20. The battery 20 is connected to the drive unit 10 via the system main relay 21.

The system main relay 21 is disposed between the drive unit 10 and the battery 20. The system main relay 21 is opened and closed in response to a control signal from the ECU 100.

The vehicle 1 is configured such that "external charging" can be performed. "External charging" means charging the battery 20 with the electric power supplied from an alternating-current power supply 200 disposed outside the vehicle (hereinafter, also referred to as "external power supply"). The vehicle 1 includes the charging relay 22, the battery charger 30, and the connector 40, as structural members for performing external charging.

The charging relay 22 is disposed between the battery 20 and the battery charger 30. The charging relay 22 is opened and closed in response to a control signal from the ECU 100.

The connector 40 is configured such that the connector 40 can be coupled to a connector 210 connected to the external power supply 200.

The battery charger 30 has an input-side end portion that is connected to the connector 40, and an output-side end portion that is connected to the battery 20 via the charging relay 22. The battery charger 30 converts alternating current received from the external power supply 200 into direct current with which the battery 20 can be charged, based on a control signal from the ECU 100, and outputs the converted direct current to the battery 20.

Specifically, the battery charger 30 includes the AC-DC converter 31, the DC-DC converter 32, the capacitor 33, the voltage sensor 34, and the drive circuit 35. The AC-DC converter 31 and the DC-DC converter 32 are connected to each other through a positive line PL and a negative line NL.

The AC-DC converter 31 converts (rectifies) the alternating current received from the external power supply 200 via the connector 40 into the direct current based on a driving signal from the drive circuit 35, and outputs the converted direct current to the positive line PL and the negative line NL. Furthermore, the AC-DC converter 31 serves also as a power-factor correction (PFC) circuit that improves a power factor by bringing the waveform of the alternating-current electric power received from the external power supply 200 closer to a sine wave. The AC-DC converter 31 may also have a function of boosting the voltage of the alternating-current electric power received from the external power supply 200.

Based on a driving signal from the drive circuit 35, the DC-DC converter 32 converts an output voltage from the AC-DC converter 31 into a voltage of the battery 20, and outputs the converted voltage to the battery 20. The DC-DC converter 32 is a so-called isolated DC-DC converter. The DC-DC converter 32 includes: a converter circuit that converts direct current supplied from the positive line PL and the negative line NL into high-frequency alternating current; an isolation transformer that converts a high-frequency alternating-current voltage received from the converter circuit into a voltage level corresponding to a turn ratio between a primary coil and a secondary coil; and a converter circuit that rectifies the alternating current output from the isolation transformer to direct current and outputs the rectified direct current to the battery 20.

The capacitor 33 has one end portion connected to the positive line PL and the other end portion connected to the negative line NL to smooth the voltage between the positive line PL and the negative line NL.

The voltage sensor 34 detects a voltage between the positive line PL and the negative line NL (i.e., a voltage across the capacitor 33, which will be hereinafter also referred to as "voltage VH"), and outputs the detection result to the drive circuit 35.

The drive circuit 35 includes a charging central processing unit (CPU) (not illustrated). The drive circuit 35 outputs a driving signal to the AC-DC converter 31 and the DC-DC converter 32 based on a control signal from the ECU 100, thereby controlling driving of the AC-DC converter 31 and the DC-DC converter 32.

The ECU 100 incorporates a central processing unit (CPU) and a memory which are not illustrated. Based on the information stored in the memory or the information from each sensor, the ECU 100 controls each of the components (the drive unit 10, the system main relay 21, the charging relay 22, and the battery charger 30) of the vehicle 1.

The ECU 100 acquires the information indicating the state of the battery charger 30 from the drive circuit 35, and outputs a control signal to the drive circuit 35 such that charging electric power by external charging becomes target electric power. At this time, the ECU 100 executes control such that the output voltage from the AC-DC converter 31 becomes a target voltage.

During external charging of the vehicle 1 having the above-described configuration, if an alternating-current voltage (hereinafter, also simply referred to as "AC voltage") input into the battery charger 30 from the external power supply 200 fluctuates or has an abnormal waveform as compared with the AC voltage in a normal state, the output voltage from the AC-DC converter (PFC circuit) 31 fails to become a target voltage, which causes a difference between the output electric power from the AC-DC converter 31 and the output electric power from the DC-DC converter 32. Under the influence of such a difference, the voltage VH (the voltage across the capacitor 33) which is a voltage on the output side of the AC-DC converter 31 fluctuates, which may cause generation of rush currents or cause the voltage VH to exceed a withstanding voltage of the capacitor 33.

In view of this, when the voltage VH is out of a prescribed range, external charging may temporarily be stopped until the voltage VH is stabilized to fall within the prescribed range. However, when fluctuations or waveform aberration of AC voltage is frequently repeated over a prolonged period, an intermittent external charging operation (an external charging operation restarted and then immediately stopped) is repeated. This may result in an excessive increase in external charging time. The intermittent external charging operation may also cause flicker inside a facility provided with the external power supply 200.

Thus, the ECU 100 according to the present embodiment continues external charging while limiting charging electric power by the external charging, when the number of times that the voltage VH is out of the prescribed range exceeds a prescribed number of times during the external charging. Limiting the charging electric power decreases a difference between the output electric power from the AC-DC converter 31 and the output electric power from the DC-DC converter 32. This makes it possible to narrow the range of fluctuations of the voltage VH. As a result, generation of rush currents is reduced. Furthermore, the intermittent external charging operation is avoided by continuing the external charging while limiting charging electric power. As a result, it becomes possible to prevent an excessive increase in external charging time while reducing fluctuations in the voltage VH.

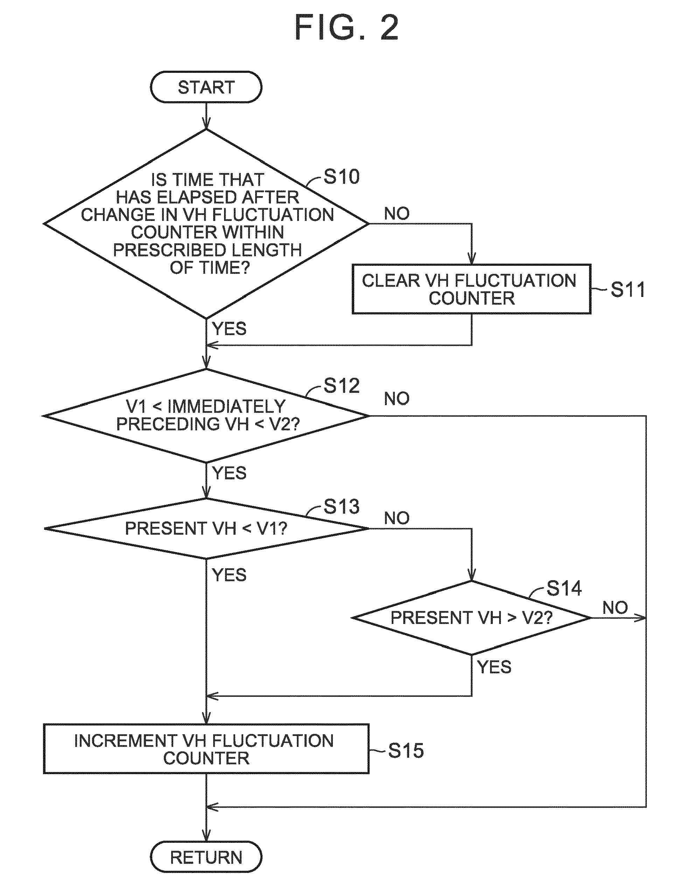

FIG. 2 is a flowchart illustrating a procedure that is executed when the ECU 100 counts the number of times that the voltage VH (the voltage on the output side of the AC-DC converter 31) is out of a prescribed range. The flowchart is repeatedly executed at prescribed time intervals. Note that "VH fluctuation counter" described below is a parameter indicating the number of times that the voltage VH is out of the prescribed range (a range between a lower limit voltage V1 and an upper limit voltage V2). The parameter is stored in the internal memory of the ECU 100.

In step (hereinafter, steps are abbreviated to "S") 10, the ECU 100 determines whether the time that has elapsed after an immediately preceding change in the VH fluctuation counter is within a prescribed length of time.

When the time that has elapsed after the immediately preceding change in the VH fluctuation counter is longer than the prescribed length of time (NO in S10), the ECU 100 clears the VH fluctuation counter to zero in S11.

On the other hand, when the time that has elapsed after the immediately preceding change in the VH fluctuation counter is within the prescribed length of time (YES in S10), the ECU 100 determines in S12 whether the voltage VH in the immediately preceding cycle is included in the prescribed range (the range between the lower limit voltage V1 and the upper limit voltage V2). When the voltage VH in the immediately preceding cycle is outside the prescribed range (NO in S12), the ECU 100 ends the process.

When the voltage VH in the immediately preceding cycle is included in the prescribed range (YES in S12), the ECU 100 determines in S 13 and S 14 whether the voltage VH in the present cycle is outside the prescribed range. Specifically, the ECU 100 determines in S 13 whether the voltage VH in the present cycle is lower than the lower limit voltage V1, and determines in S14 whether the voltage VH in the present cycle is higher than the upper limit voltage V2. When the voltage VH in the present cycle is included in the prescribed range (NO in S13 and NO in S 14), the ECU 100 ends the process.

When the voltage VH in the present cycle is outside the prescribed range (YES in S 13 or YES in S 14), the ECU 100 increments the VH fluctuation counter by one in S15.

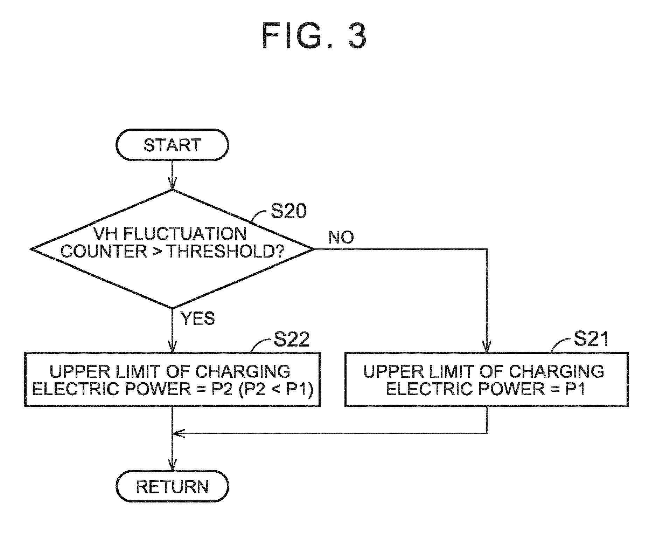

FIG. 3 is a flowchart illustrating a procedure that is executed when the ECU 100 limits the charging electric power based on the VH fluctuation counter. The flowchart is repeatedly executed at prescribed time intervals. Note that, a case in which the charging electric power is limited by lowering the upper limit of the charging electric power will be described as an example.

The ECU 100 determines in S20 whether the VH fluctuation counter exceeds a threshold (i.e., whether the number of times that the voltage VH is out of the prescribed range exceeds the prescribed number of times). The determination is performed to determine whether a phenomenon in which the AC voltage fluctuates or has an abnormal waveform as compared with that in a normal state (hereinafter, also referred to as "AC voltage abnormality") is a short-term (temporary) phenomenon or a long-term phenomenon.

When the VH fluctuation counter is less than or equal to the threshold (NO in S20), the AC voltage abnormality is considered to be a short-term phenomenon. Thus, in S21, the ECU 100 sets the upper limit of the charging electric power to a normal value P 1.

On the other hand, when the VH fluctuation counter exceeds the threshold (YES in S20), the AC voltage abnormality is considered to be a long-term phenomenon. Thus, in S22, the ECU 100 sets the upper limit of the charging electric power to a limit value P2. The limit value P2 is a value lower than the normal value P1. The limit value P2 is set in advance to a value at which frequent fluctuations of the voltage VH can be reduced.

As described above, the ECU 100 according to the present embodiment monitors the voltage VH, which is the voltage on the output side (downstream side) of the AC-DC converter 31, and stores the number of times that the voltage VH is out of the prescribed range as a VH fluctuation counter during external charging. When the VH fluctuation counter exceeds the threshold, the AC voltage abnormality is considered to be a long-term phenomenon. Thus, the ECU 100 continues external charging while limiting the upper limit of the charging electric power to the limit value P2 that is lower than the normal value P1. This makes it possible to reduce fluctuations in the voltage VH while preventing an excessive increase in external charging time. It also becomes possible to prevent generation of flicker in the facility provided with the external power supply 200. If the limit value P2 is set to an excessively low value, the external charging time may be longer than that in the case of an external intermittent charging operation caused by fluctuations in the voltage VH. In view of this, the limit value P2 needs to be set to a value at which the external charging time is shorter than that in the case of the external intermittent charging operation caused by fluctuations in the voltage VH.

When the value of the VH fluctuation counter does not change for the prescribed length of time, the AC voltage abnormality is considered to be eliminated. Thus, the ECU 100 clears the VH fluctuation counter to zero, and cancels the limitation on the charging electric power to return the upper limit of the charging electric power to the normal value P1 which is higher than the limit value P2. As a result, an excessive increase in external charging time is further reliably prevented.

In the above-described embodiment, the charging apparatus (the battery charger 30 and the ECU 100) is mounted in the vehicle 1 to charge the battery 20 mounted in the vehicle 1. However, the charging apparatus according to the invention may be used without being mounted in the vehicle 1, and is also applicable to a case of charging an electric storage device that is not mounted in the vehicle 1.

In the above-described embodiment, the processes illustrated in the flowcharts in FIG. 2 and FIG. 3 are executed by the ECU 100 disposed outside the battery charger 30. However, the processes illustrated in the flowcharts of FIG. 2 and FIG. 3 may be executed by the drive circuit 35 disposed inside the battery charger 30.

The embodiments of the invention that have been described in the specification are to be considered in all respects as illustrative and not restrictive. The technical scope of the invention is defined by claims, and all changes which come within the meaning and range of equivalency of the claims are therefore intended to be embraced therein.

## Claims

1. A charging apparatus configured to charge an electric storage device (20) with electric power supplied from an alternating-current power supply (200), the charging apparatus comprising:
a first converter (31) configured to convert alternating current received from the alternating-current power supply (200) into direct current, and the first converter (31) configured to output the direct current;
a second converter (32) configured to convert a voltage output from the first converter (31) into a voltage of the electric storage device (20), and the second converter (32) configured to output the converted voltage to the electric storage device (20); and
an electronic control unit (100) configured to control the first converter (31) and the second converter (32) to control charging electric power to be supplied to the electric storage device (20), wherein
the electronic control unit (100) is configured to continue charging of the electric storage device (20) while limiting an upper limit of the charging electric power to a larger extent when the number of times that the voltage on an output side of the first converter (31) is out of a prescribed range exceeds a prescribed number of times during the charging of the electric storage device (20), than when the number of times that the voltage on the output side of the first converter (31) is out of the prescribed range does not exceed the prescribed number of times during the charging of the electric storage device (20).

2. The charging apparatus according to claim 1,
wherein the electronic control unit (100) is configured to clear a count of the number of times that the voltage on the output side of the first converter (31) is out of the prescribed range to zero when a predetermined length of time has elapsed since the voltage on the output side of the first converter (31) has been out of the prescribed range.

3. The charging apparatus according to claim 1 or 2,
wherein the electronic control unit (100) is configured to clear a count of the number of times that the voltage on the output side of the first converter (31) is out of the prescribed range to zero when the voltage on the output side of the first converter (31) has remained within the prescribed range for a predetermined length of time.

4. A vehicle (1) comprising:
a drive unit (10) configured to move the vehicle (1) using electric power;
an electric storage device (20) coupled to the drive unit (10) and that is configured to supply the electric power to the drive unit (10);
a connector (40) by which electric power can be supplied to the electric storage device (20) from an alternating-current power supply external of the vehicle (1); and
the charging apparatus according to claim 1 coupled between the connector (40) and the electric storage device (20).
